# EUROPEAN PATENT SPECIFICATION

(11) **EP 2 801 638 B1**
(45) Date of publication and mention of the grant of the patent: **26.05.2021**
(21) Application number: 12870014.3
(22) Date of filing: 01.03.2012
(51) Int. Cl.: C22C 38/14, C22C 38/58, C22C 38/00, C22C 38/02, C22C 38/04, C22C 38/08, C22C 38/12, C22C 38/16, C22C 38/28, B23K 35/30

(54) **STEEL MATERIAL FOR HIGH-HEAT-INPUT WELDING**
STAHLMATERIAL ZUM SCHWEISSEN MIT HOHER WÄRMEBELASTUNG
MATÉRIAU EN ACIER POUR SOUDAGE À APPORT THERMIQUE ÉLEVÉ

(43) Date of publication of application: 12.11.2014
(73) Proprietor: JFE Steel Corporation, Tokyo, 100-0011 (JP)
(72) Inventor: YOKOTA, Tomoyuki, Tokyo 100-0011 (JP); NABESHIMA, Seiji, Tokyo 100-0011 (JP); NISHIMURA, Kimihiro, Tokyo 100-0011 (JP); MITAO, Shinji, Tokyo 100-0011 (JP)
(74) Representative: Hoffmann Eitle
(86) International application number: PCT/JP2012/055892
(87) International publication number: WO 2013/128650

(56) References cited:
- EP-A1- 2 036 995
- EP-A1- 2 093 302
- WO-A1-2010/134220
- WO-A1-2013/088715
- CA-A1- 2 788 713
- JP-A- H03 162 522
- JP-A- 2007 056 279
- JP-A- 2007 277 681
- JP-A- 2007 277 681
- JP-A- 2011 241 461
- Standard: "ASTM Standard E1019-11. Test Methods for Determination of Carbon, Sulfur, Nitrogen, and Oxygen in Steel, Iron, Nickel, and Cobalt Alloys by Various Combustion and Fusion Techniques", , 30 June 2011 (2011-06-30), XP055615886, West Conshohocken, PA DOI: 10.1520/E1019-11 Retrieved from the Internet: URL:https://compass.astm.org/download/E101 9-11.16120.pdf [retrieved on 2019-08-27]

## Description

### [Technical Field]

The present invention relates to structural steel plates used for various steel structures in fields such as shipbuilding, architecture, and civil engineering, and particularly to structural steel plates suitable for high heat input welding with a welding heat input of more than 300 kJ/cm.

### [Background Art]

Structural steel plates used in fields such as shipbuilding, architecture, and civil engineering are generally welded into steel structures of desired shapes. For safety reasons, structural steel plates used for such steel structures need to have both excellent base plate toughness and excellent weld toughness.

With the increasing size of such steel structures and ships and the increasing strength and thickness of structural steel plates used therefor, high-efficiency high heat input welding, such as submerged arc welding, electrogas arc welding, or electroslag welding, has been applied to welding procedures. A welding procedure using such high heat input welding requires structural steel plates with excellent weld toughness.

It is generally known, however, that a higher welding heat input coarsens the microstructure of a welding heat-affected zone (heat-affected zone, also referred to as HAZ) and thus decreases the toughness of the HAZ (also referred to as HAZ toughness). To minimize the decrease in toughness due to high heat input welding, many solutions have been proposed. For example, a technique that uses finely dispersed TiN to reduce coarse austenite grains and to create ferrite nucleation sites has already been put to practical use. A technique that uses dispersed titanium oxide has also been developed (Patent Literature 1).

The technique that mainly uses TiN, however, has a problem in that titanium is not effective in reducing coarse austenite grains in the HAZ, which is heated to the TiN dissolution temperature range, and in that solute titanium and solute nitrogen embrittle the matrix microstructure and thus significantly decrease the toughness.

The technique that uses titanium oxide has a problem in that it is difficult to uniformly and finely disperse the oxide.

One known technique that mainly uses TiN is disclosed in Patent Literature 2. In this technique, boron is added to a welding material and steel plates to fix solute nitrogen, which is attributed to embrittlement adjacent to the fusion line, generated by the dissolution of TiN.

According to Patent Literature 2, the toughness of a high heat input weld can be improved in all of the weld metal, the HAZ, and the fusion line by adding boron to steel plates in an amount that does not adversely affect the toughness, by adding boron to the weld metal through a welding material (wire or flux) in a sufficient amount to inhibit precipitation of ferrite side plates from austenite grain boundaries, and by adding boron to the HAZ through diffusion from the weld metal in the minimum amount required to fix solute nitrogen generated by the dissolution of TiN.

A steel composition having a yield strength of 460 N/mm² or more and containing relatively large amounts of carbon and alloying elements contains several percent by volume of a hard brittle microstructure, called martensite-austenite constituents (also referred to as MA), formed in the fusion line microstructure after high heat input welding with a welding heat input of more than 300 kJ/cm. This microstructure has a problem in that it prevents a further improvement in toughness.

Thus, it is necessary to further reduce coarse austenite grains and MA to improve the high heat input HAZ toughness, particularly for high-strength grades. Techniques for reducing the MA content of a high heat input HAZ are disclosed in Patent Literature 3, Patent Literature 4, and Patent Literature 5.

Patent Literature 3 teaches that the formation of MA can be inhibited by reducing the carbon content while increasing the manganese content to reduce the transformation start temperature so that less carbon diffuses into untransformed austenite.

Patent Literature 4 teaches that it is important to reduce the phosphorus content as well as the carbon and silicon contents to reduce the MA content of a high heat input welding HAZ. Patent Literature 5 teaches that elements such as chromium, molybdenum, and vanadium are deliberately added to allow bainite transformed at lower temperature to be formed at low cooling rate, thereby forming a film-shaped, rather than bulky, MA microstructure, while the carbon content is minimized to form a fine MA microstructure.

Patent Literature 6 specifies the upper limit of the MA fraction of a HAZ formed after welding with a welding heat input of 130 kJ/cm or less.

Patent Literature 7 discloses a technique for improving the high heat input HAZ toughness by forming fine crystal grains in the HAZ microstructure, rather than controlling MA. In this technique, a slight amount of boron is added to a steel containing TiO to inhibit transformation from grain boundaries while a larger amount of manganese is added to increase the drive force of ferrite transformation and thus to increase the effect of TiO-MnS composite precipitates as intragranular nucleation sites, thereby forming fine crystal grains and improving the HAZ toughness.

In view of the fact that it is practically difficult to stably form and disperse titanium oxide, as described above, Patent Literature 8 discloses a technique for forming fine HAZ crystal grains by effecting aluminum deoxidization with a relatively large amount of aluminum to inhibit the formation of TiO and instead maximizing the pinning effect of TiN.

### [Citation List]

### [Patent Literature]

PTL 1: Japanese Unexamined Patent Application Publication No. 57-51243
PTL 2: Japanese Patent No. 3722044
PTL 3: Japanese Unexamined Patent Application Publication No. 2007-84912
PTL 4: Japanese Unexamined Patent Application Publication No. 2008-163446
PTL 5: Japanese Patent No. 3602471
PTL 6: Japanese Patent No. 2135056
PTL 7: Japanese Unexamined Patent Application Publication No. 2007-277681
PTL 8: Japanese Unexamined Patent Application Publication No. 2011-6772

### [Summary of Invention]

### [Technical Problem]

The technique of Patent Literature 2 is an innovative technique in which solute nitrogen, which is generated by the dissolution of TiN and adversely affects the toughness adjacent to the fusion line, is fixed by boron diffused from the weld metal. This technique, however, cannot avoid a decrease in the effect of reducing coarse austenite grains due to the dissolution of TiN. The technique that uses titanium oxide still has a problem in that it is difficult to uniformly and finely disperse titanium oxide.

The technique of Patent Literature 3, which is intended to reduce MA, requires niobium to be added in an amount of 0.03% by mass or more to compensate for a decrease in strength due to the reduced carbon content. This may result in the formation of MA.

The technique of Patent Literature 4 can reduce MA and can also finely disperse nucleation sites by adding a proper amount of calcium. This technique, however, has a problem in that it requires the addition of nickel and thus involves high alloy cost.

The technique of Patent Literature 5 is mainly intended to control the morphology of MA, rather than to reduce the MA volume fraction, and it is therefore difficult to drastically improve the high heat input HAZ toughness. The technique of Patent Literature 6 is directed to welding with a welding heat input of 130 kJ/cm or less and is therefore not useful for improving the toughness after high heat input welding with a heat input of more than 300 kJ/cm, which tends to form more MA. The technique of Patent Literature 7 may involve the adverse effects of MA due to the increased amount of manganese, which is an austenite-forming element. The technique of Patent Literature 8, which uses only TiN, is insufficient to form fine crystal grains, and it is difficult to achieve the low-temperature toughness to be achieved by the present invention.

The present invention has been made to improve the high heat input HAZ toughness by reducing coarse austenite grains and MA while minimizing the alloy cost. An object of the present invention is to provide a structural steel plate for high heat input welding that has excellent HAZ toughness after high heat input welding with a welding heat input of more than 300 kJ/cm.

### [Solution to Problem]

The inventors have conducted extensive research to improve the toughness of a high-strength steel having a yield strength of 460 N/mm² or more in the HAZ adjacent to the fusion line after high heat input welding with a welding heat input of more than 300 kJ/cm. As a result, the inventors have made the following findings: 1. To reduce coarse austenite grains, it is effective to combine the pinning effects of titanium oxide and TiN; and 2. To reduce MA, it is effective to deliberately add manganese as an element effective in increasing the strength while minimizing the formation of MA and, at the same time, to reduce the content of phosphorus, which is an impurity element, to 0.008% by mass or less, thereby substantially eliminating the formation of MA.

The inventors have found that the pinning effects of titanium oxide and TiN can be combined by optimizing the series of processing steps so that titanium oxide is uniformly and finely dispersed in a steel slab. This can be achieved by adding titanium while minimizing the content of aluminum, which is a highly deoxidizing element, in an initial deoxidizing step of a steelmaking process to ensure a sufficient amount of dissolved oxygen in the molten steel, and transferring the steel to a casting step immediately after the precipitation of titanium oxide.

The inventors have also found that the MA content of the HAZ microstructure can be reduced by increasing manganese and reducing phosphorus so that untransformed austenite, which forms during cooling after high heat input welding and has a high carbon concentration, decomposes readily into cementite.

Further research based on the above findings has led to the present invention. Specifically, the present invention provides a structural steel plate as defined in the appended claims.

### [Advantageous Effects of Invention]

Because the present invention provides a structural steel plate having excellent HAZ toughness after high heat input welding with a welding heat input of more than 300 kJ/cm, it contributes significantly to an improvement in the quality of large structures constructed by high heat input welding such as submerged arc welding, electrogas arc welding, or electroslag welding.

### [Brief Description of Drawings]

[Fig. 1]

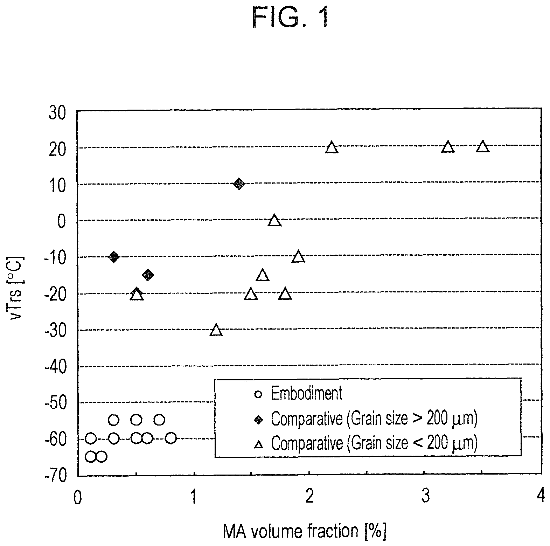

Fig. 1 shows prior austenite grain diameter, MA area fraction, and simulated HAZ toughness.

### [Description of Embodiments]

The present invention defines the constituent composition and the microstructure of a HAZ formed by high heat input welding with a heat input of more than 300 kJ/cm.

### [Constituent Composition]

### Carbon: 0.03% to 0.08% by Mass

The lower limit of the carbon content is set to 0.03% by mass to provide the strength required for structural steels. The upper limit of the carbon content is set to 0.08% by mass to inhibit the formation of MA. Preferably, the carbon content is 0.035% to 0.068% by mass.

### Silicon: 0.01% to 0.15% by Mass

Silicon, which serves as a deoxidizing agent in a steelmaking process, needs to be present in an amount of 0.01% by mass or more. A silicon content of more than 0.15% by mass, however, would degrade the base plate toughness and would also degrade the high heat input HAZ toughness because of the formation of MA. Thus, the silicon content should be 0.01% to 0.15% by mass, preferably 0.01% to 0.10% by mass.

### Manganese: 1.8% to 2.6% by Mass

Manganese is an important element in the present invention and needs to be present in an amount of 1.8% by mass or more irrespective of other alloying elements to ensure sufficient base plate strength. Manganese allows untransformed austenite, which forms during cooling after high heat input welding and has a high carbon concentration, to decompose into cementite more readily than other alloying elements, such as nickel, and is therefore effective in inhibiting the formation of MA to ensure sufficient HAZ toughness. A manganese content of more than 2.6% by mass, however, would degrade the weld toughness. Thus, the manganese content should be 1.8% to 2.6% by mass, preferably 1.8% to 2.2% by mass, more preferably more than 2.0% to 2.2% by mass.

### Phosphorus: 0.008% by Mass or Less

Phosphorus is also an important element in the present invention. A phosphorus content of more than 0.008% by mass would inhibit the decomposition of untransformed austenite, which forms during cooling after high heat input welding and has a high carbon concentration, into cementite and would therefore degrade the toughness because of the formation of MA. Thus, the phosphorus content should be 0.008% by mass or less, preferably 0.006% by mass or less.

### Sulfur: 0.0005% to 0.0040% by Mass

Sulfur needs to be present in an amount of 0.0005% by mass or more to form MnS and CaS, which are effective in promoting intragranular transformation to improve the toughness. A sulfur content of more than 0.0040% by mass, however, would degrade the base plate toughness. Thus, the sulfur content should be 0.0005% to 0.0040% by mass, preferably 0.0015% to 0.0030% by mass.

### Aluminum: 0.005% by Mass or Less

A high aluminum content would inhibit the formation of titanium oxide and would therefore decrease the toughness because of the formation of coarse austenite grains adjacent to the high heat input welding fusion line. To form titanium oxide, therefore, the aluminum content should be minimized in the present invention, although it may be present in an amount of up to 0.005% by mass. Preferably, the aluminum content is 0.004% or less.

### Niobium: 0.003% to 0.03% by Mass

Niobium is an element effective in ensuring sufficient base plate strength and toughness and sufficient joint strength, although a niobium content of less than 0.003% is of limited effectiveness. A niobium content of more than 0.03% by mass, however, would degrade the toughness because of the formation of MA in the HAZ. Thus, the niobium content should be 0.003% to 0.03% by mass, preferably 0.005% to 0.02% by mass.

### Titanium: 0.005% to 0.02% by Mass

During solidification, titanium disperses in the form of titanium oxide, which is a secondary deoxidation product, and excess titanium precipitates in the form of TiN. This reduces coarse austenite grains and also creates ferrite nucleation sites in the HAZ, thus contributing to improved toughness. Titanium oxide, which contributes to pinning, is known to be more effective as its size becomes smaller. The present invention is intended to form titanium oxide having a size of 1.0 µm or less. A titanium content of less than 0.005% by mass would not provide a sufficient amount of titanium oxide to contribute to pinning. An excessive titanium content, however, would result in the precipitation of excess titanium in the form of TiN, and not in the form of an oxide. A titanium content of more than 0.030% by mass would result in the formation of coarse TiN precipitations and would therefore not be effective in inhibiting the formation of coarse austenite grains. Thus, the titanium content should be
0.005% to 0.02% by mass.

### Nitrogen: 0.0050% to 0.0080% by Mass

Nitrogen is an element necessary to provide the required TiN content. A nitrogen content of less than 0.0050% by mass would not provide a sufficient TiN content. A nitrogen content of more than 0.0080% by mass would decrease the HAZ toughness because of an increased amount of solute nitrogen in the region where TiN dissolves and would also decrease the weld metal toughness. Thus, the nitrogen content should be 0.0050% to 0.0080% by mass, preferably 0.0052% to 0.0080% by mass, more preferably 0.0055% to 0.0080% by mass.

While the titanium content and the nitrogen content are controlled within the above respective ranges, the ratio of titanium to nitrogen is preferably controlled within the range of 1.3 to 2.5 to sufficiently utilize the pinning effects of titanium oxide and TiN and to avoid decreased toughness due to excess solute nitrogen.

### Boron: 0.0003% to 0.0025% by Mass

Boron is an element that forms BN in the HAZ to reduce solute nitrogen and also creates ferrite nucleation sites. To achieve these effects, boron needs to be present in an amount of 0.0003% by mass or more. A boron content of more than 0.0025% by mass, however, would result in excessive hardenability and would therefore degrade the toughness. Thus, the boron content should be 0.0003% to 0.0025% by mass, preferably 0.0005% to 0.0020% by mass.

### Ceq (IIW): 0.33 to 0.45

A Ceq (IIW) (= C + Mn/6 + (Cr + Mo + V)/5 + (Cu + Ni)/15, where the individual element symbols denote the contents (% by mass) of the respective elements) of less than 0.33 would not provide the necessary base plate strength. A Ceq of more than 0.45 would result in an MA area fraction of more than 1.0% in the HAZ adjacent to the fusion line after high heat input welding and would therefore degrade the HAZ toughness. Thus, Ceq should be 0.33 to 0.45, preferably 0.37 to 0.42, more preferably 0.39 to 0.42.

The structural steel plate according to the present invention may further contain vanadium, which functions as ferrite nucleation sites, and/or at least one of copper, nickel, chromium, and molybdenum, which have functions such as improving the strength.

### Vanadium: 0.2% by Mass or Less

Vanadium contributes to improved base plate strength and toughness and also functions as ferrite nucleation sites in the form of VN. To achieve these effects, vanadium is preferably present in an amount of 0.03% by mass or more. A vanadium content of more than 0.2% by mass, however, would decrease the toughness. If the structural steel plate contains vanadium, the vanadium content is preferably 0.2% by mass or less, more preferably 0.1% by mass or less.

### Copper: 1.0% by Mass or Less

Copper is an element effective in increasing the base plate strength. To achieve this effect, copper is preferably present in an amount of 0.2% by mass or more. An excessive copper content, however, would adversely affect the toughness. If the structural steel plate contains copper, the upper limit is preferably set to 1.0% by mass. More preferably, the copper content is 0.4% by mass or less.

### Nickel: 1.0% by Mass or Less

Nickel is an element effective in increasing the base plate strength. To achieve this effect, nickel is preferably present in an amount of 0.2% by mass or more. An excessive nickel content, however, would adversely affect the toughness. If the structural steel plate contains nickel, the upper limit is preferably set to 1.0% by mass. More preferably, the nickel content is 0.4% by mass or less.

### Chromium: 0.4% by Mass or Less

Chromium is an element effective in increasing the base plate strength. To achieve this effect, chromium is preferably present in an amount of 0.1% by mass or more. An excessive chromium content, however, would adversely affect the toughness. If the structural steel plate contains chromium, the upper limit is preferably set to 0.4% by mass.

### Molybdenum: 0.4% by Mass or Less

Molybdenum is an element effective in increasing the base plate strength. To achieve this effect, molybdenum is preferably present in an amount of 0.1% by mass or more. An excessive molybdenum content, however, would adversely affect the toughness. If the structural steel plate contains molybdenum, the upper limit is preferably set to 0.4% by mass.

The structural steel plate according to the present invention may further contain at least one of calcium, magnesium, zirconium, and a rare earth metal.

### Calcium: 0.0005% to 0.0050% by Mass

Calcium is an element effective in improving the toughness by fixing sulfur and dispersing oxysulfides. To achieve this effect, calcium is preferably present in an amount of at least 0.0005% by mass or more. A calcium content of more than 0.0050% by mass, however, would not provide any greater effect. If the structural steel plate contains calcium, the calcium content is preferably 0.0005% to 0.0050% by mass, more preferably 0.0010% to 0.0030% by mass.

### Magnesium: 0.0005% to 0.0050% by Mass

Magnesium is an element effective in improving the toughness by dispersing oxides. To achieve this effect, magnesium is preferably present in an amount of at least 0.0005% by mass or more. A magnesium content of more than 0.0050% by mass, however, would not provide any greater effect. If the structural steel plate contains magnesium, the magnesium content is preferably 0.0005% to 0.0050% by mass, more preferably 0.0010% to 0.0030% by mass.

### Zirconium: 0.001% to 0.02% by Mass

Zirconium is an element effective in improving the toughness by dispersing oxides. To achieve this effect, zirconium is preferably present in an amount of at least 0.001% by mass. A zirconium content of more than 0.02% by mass, however, would not provide any greater effect. If the structural steel plate contains zirconium, the zirconium content is preferably 0.001% to 0.02% by mass, more preferably 0.005% to 0.0015% by mass.

### Rare Earth Metal: 0.001% to 0.02% by Mass

Rare earth metals are elements effective in improving the toughness by dispersing oxides. To achieve this effect, a rare earth metal is preferably present in an amount of at least 0.001% by mass. A rare earth metal content of more than 0.02% by mass, however, would not provide any greater effect. If the structural steel plate contains a rare earth metal, the rare earth metal content is preferably 0.001% to 0.02% by mass, more preferably 0.005% to 0.0015% by mass.

In the present invention, oxygen is present in an amount of 0.0010% or more to form titanium oxide. An oxygen content of 0.0040% or more, however, would result in the formation of coarse TiO and could therefore decrease the toughness. Thus, the oxygen content is 0.0040% or less.

### HAZ Microstructure

The HAZ microstructure adjacent to the fusion line has a prior austenite grain diameter of 200 µm or less and an MA area fraction of 1.0% or less.

Fig. 1 is a graph showing the relationship between the MA fraction (% by volume) and vTrs (°C) of the HAZ in the examples shown in Table 2. This graph shows that the samples having a prior austenite grain diameter of 200 µm or less and an MA fraction of the HAZ of 1% by volume or less had a vTrs of -55°C or lower. The HAZ toughness level required in the present invention is equivalent to a vTrs of -55°C or lower.

As described above, the present invention provides a technique for improving the toughness of a high heat input weld by inhibiting the growth of austenite grains and the formation of MA in the HAZ adjacent to the fusion line, in which coarse austenite grains tend to form because of the exposure to the highest temperature in the entire HAZ. To achieve these effects, the prior austenite grain diameter of the HAZ adjacent to the fusion line needs to be reduced to 200 µm or less, and the MA area fraction needs to be reduced to 1.0% or less.

The HAZ adjacent to the fusion line refers to a HAZ extending 500 µm from the fusion line. The prior austenite grain diameter of the HAZ adjacent to the fusion line can be examined by polishing and etching a cross section of a weld and observing it under a light microscope.

Similarly, the MA in the HAZ adjacent to the fusion line can be examined by polishing and etching a cross section of a weld and observing it under a scanning electron microscope (SEM). The HAZ microstructure adjacent to the fusion line contains MA, acicular ferrite, and bainite in major proportions and also contains other constituents such as ferrite and pearlite.

The structural steel plate according to the present invention can be manufactured, for example, as follows. A hot metal is first refined into steel in a converter. After RH degasifying, the steel is subjected to continuous casting or to ingot casting and blooming to form slabs. The resulting slabs are reheated and hot-rolled. Depending on the desired strength and toughness, the hot-rolled plates are allowed to cool or are subjected to accelerated cooling or to heat treatment such as direct quenching and tempering, reheat quenching and tempering, or reheat normalizing and tempering. The advantageous effects of the present invention will now be specifically described with reference to the following examples.

### [EXAMPLES]

Steels having the compositions shown in Tables 1-1 and 1-2 were prepared in a high-frequency melting furnace with a capacity of 150 kg and were then hot-rolled into slabs having a thickness of 70 mm. After the slabs were heated at 1,150°C for 2 hours, they were further hot-rolled to a thickness of 30 mm at a temperature in the center along the thickness of 850°C and were then subjected to accelerated cooling at a cooling rate of 8°C/s. The cooling rate of a slab having a thickness of 30 mm in the center along the thickness was intended to simulate the cooling rate of a slab having a thickness of 60 mm at a position that is one fourth the thickness.

After the rolled plates having a thickness of 30 mm were tempered at 500°C for 10 minutes, round-bar tensile specimens including a parallel portion having a diameter of 14 mm and a length of 85 mm and having a gauge length of 70 mm and 2 mm V-notch Charpy impact specimens were cut from the rolled plates and were evaluated for base plate strength (yield stress YS and tensile strength TS) and toughness. The 2 mm V-notch Charpy specimens were evaluated for toughness by conducting a Charpy impact test in the range of -100°C to 40°C to determine the fracture transition temperature vTrs corresponding to a ductile fracture ratio of 50%.

To determine the characteristics of these steel plates after a weld thermal cycle, specimens having a width of 80 mm, a length of 80 mm, and a thickness of 15 mm were cut from the steel plates and were subjected to a simulated weld thermal cycle involving heating to 1,450°C and cooling from 800°C to 500°C in 270 seconds (equivalent to a HAZ after electrogas welding with a heat input of 400 kJ/cm). The simulated HAZ was evaluated for toughness using 2 mm V-notch Charpy impact specimens.

The prior austenite grain diameter of the simulated HAZ was determined by developing the microstructure using nital etching, tracing prior austenite grains on five light micrographs at 100x magnification, performing imaging analysis on each prior austenite grain, and calculating the average circle-equivalent diameter thereof. The MA area fraction of the simulated HAZ was determined by developing MA using a two-step etching method, tracing MA on five SEM micrographs at 2,000x magnification, performing imaging analysis on each MA, and calculating the average area fraction thereof.

Table 2 and Fig. 1 show the prior austenite grain diameter, the MA area fraction, and the simulated HAZ toughness along with the mechanical properties of the base plates. As shown in Table 2 and Fig. 1, the invention examples had a prior austenite grain diameter of 200 µm or less and an MA area fraction of 1.0% or less and exhibited good simulated HAZ toughness.

In contrast, the comparative examples had a prior austenite grain diameter of more than 200 µm or an MA area fraction of more than 1.0% and exhibited poor simulated HAZ toughness. In these comparative examples, any of the contents of carbon, silicon, manganese, phosphorus, aluminum, niobium, titanium, boron, and nitrogen, Ceq (IIW), and the contents of the selective elements, such as chromium, was outside the scope of the present invention.

For reference, the absorption energies in the HAZ at -10°C and -40°C (also referred to as vE₋₁₀ and vE₋₄₀, respectively) were also measured in the invention examples. The absorption energy vE₋₁₀ in the HAZ at -10°C ranged from 257 to 297 J. The absorption energy vE₋₄₀ in the HAZ at -40°C ranged from 217 to 242 J. These absorption energies were higher than those in the HAZ adjacent to the fusion line in the steels according to the inventions disclosed in the examples of Patent Literatures 2, 3, 4, 5, and 7, demonstrating that the invention examples had excellent weld toughness.

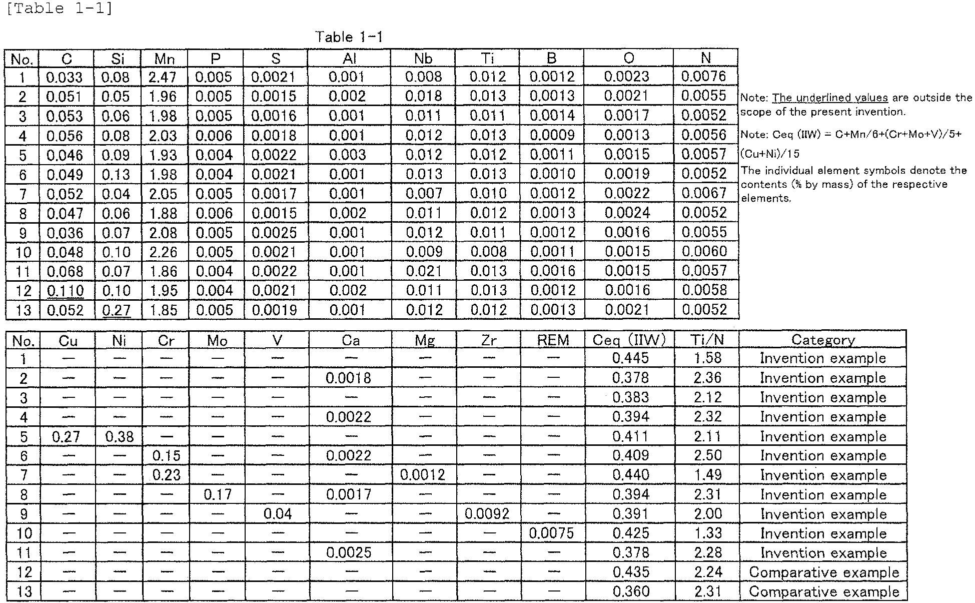

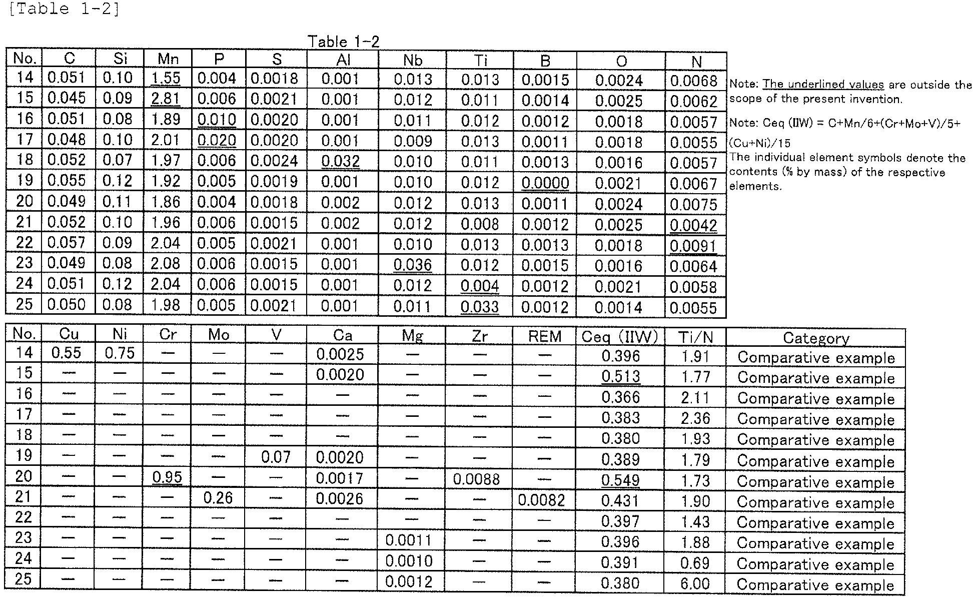

### [Table 2]

**Table 2**

| No. | Base plate | | | Simulated HAZ (equivalent to fusion line) | | | Category |
|---|---|---|---|---|---|---|---|
| | YS (MPa) | TS (MPa) | vTrs (°C) | Prior austenite grain diameter (µm) | MA area fraction (%) | vTrs (°C) | |
| 1 | 513 | 642 | -75 | 67 | 0.8 | -60 | Invention example |
| 2 | 474 | 600 | -65 | 123 | 0.1 | -60 | Invention example |
| 3 | 483 | 596 | -70 | 76 | 0.1 | -65 | Invention example |
| 4 | 473 | 606 | -70 | 78 | 0.2 | -65 | Invention example |
| 5 | 508 | 620 | -80 | 112 | 0.5 | -60 | Invention example |
| 6 | 495 | 619 | -70 | 138 | 0.6 | -60 | Invention example |
| 7 | 503 | 637 | -60 | 75 | 0.8 | -60 | Invention example |
| 8 | 490 | 605 | -75 | 95 | 0.3 | -55 | Invention example |
| 9 | 471 | 603 | -55 | 82 | 0.5 | -55 | Invention example |
| 10 | 514 | 627 | -60 | 95 | 0.7 | -55 | Invention example |
| 11 | 483 | 604 | -70 | 86 | 0.3 | -60 | Invention example |
| 12 | 504 | 638 | -50 | 85 | 1.6 | -15 | Comparative example |
| 13 | 469 | 579 | -65 | 86 | 1.5 | -20 | Comparative example |
| 14 | 475 | 609 | -55 | 95 | 1.7 | 0 | Comparative example |
| 15 | 575 | 701 | -40 | 75 | 3.2 | 20 | Comparative example |
| 16 | 466 | 582 | -45 | 124 | 1.2 | -30 | Comparative example |
| 17 | 469 | 594 | -45 | 98 | 1.9 | -10 | Comparative example |
| 18 | 480 | 593 | -40 | 254 | 0.6 | -15 | Comparative example |
| 19 | 468 | 600 | -70 | 102 | 1.8 | -20 | Comparative example |
| 20 | 599 | 730 | -40 | 91 | 3.5 | 20 | Comparative example |
| 21 | 508 | 635 | -55 | 271 | 1.4 | 10 | Comparative example |
| 22 | 479 | 606 | -50 | 66 | 0.5 | -20 | Comparative example |
| 23 | 515 | 636 | -60 | 78 | 2.2 | 20 | Comparative example |
| 24 | 471 | 604 | -60 | 305 | 0.5 | -20 | Comparative example |
| 25 | 487 | 594 | -50 | 225 | 0.3 | -10 | Comparative example |

| | | | | | | | |
|---|---|---|---|---|---|---|---|
| Note: The underlined values are outside the scope of the present invention. Note: MA denotes martensite-austenite constituents. | | | | | | | |

## Claims

1. A structural steel plate for high heat input welding, having a chemical composition consisting of 0.03% to 0.08% by mass carbon, 0.01% to 0.15% by mass silicon, 1.8% to 2.6% by mass manganese, 0.008% by mass or less phosphorus, 0.0005% to 0.0040% by mass sulfur, 0.005% by mass or less aluminum, 0.003% to 0.03% by mass niobium, 0.005% to 0.02% by mass titanium, 0.0050% to 0.0080% by mass nitrogen, 0.0003% to 0.0025% by mass boron, 0.0010% to 0.0040% by mass oxygen, optionally 0.2% by mass or less vanadium, optionally at least one of 1.0% by mass or less copper, 1.0% by mass or less nickel, 0.4% by mass or less chromium and 0.4% by mass or less molybdenum, and optionally at least one of 0.0005% to 0.0050% by mass calcium, 0.0005% to 0.0050% by mass magnesium, 0.001% to 0.02% by mass zirconium, and 0.001% to 0.02% by mass rare earth metal, and having a Ceq (IIW) of 0.33 to 0.45, the balance being iron and incidental impurities, the structural steel plate having a prior austenite grain diameter of 200 µm or less and a martensite-austenite constituent area fraction of 1.0% or less in a heat-affected zone microstructure adjacent to a fusion line after high heat input welding with a welding heat input of more than 300 kJ/cm,
wherein Ceq (IIW) = C + Mn/6 + (Cr + Mo + V)/5 + (Cu + Ni)/15, where the individual element symbols denote the contents (% by mass) of the respective elements.

2. The structural steel plate for high heat input welding according to Claim 1, wherein the chemical composition contains 0.03% by mass or more and 0.2% by mass or less vanadium.

3. The structural steel plate for high heat input welding according to Claim 1 or 2, wherein the chemical composition contains at least one of 0.2% by mass or more and 1.0% by mass or less copper, 0.2% by mass or more and 1.0% by mass or less nickel, 0.1% by mass or more and 0.4% by mass or less chromium, and 0.1% by mass or more and 0.4% by mass or less molybdenum.

4. The structural steel plate for high heat input welding according to any one of Claims 1 to 3, wherein the chemical composition contains at least one of 0.0005% to 0.0050% by mass calcium, 0.0005% to 0.0050% by mass magnesium, 0.001% to 0.02% by mass zirconium, and 0.001% to 0.02% by mass rare earth metal.

## Patentansprüche

1. Baustahlblech zum Schweißen mit hohem Wärmeeintrag, das eine chemische Zusammensetzung aufweist, bestehend aus 0,03 bis 0,08 Massen-% Kohlenstoff, 0,01 bis 0,15 Massen-% Silicium, 1,8 bis 2,6 Massen-% Mangan, 0,008 Massen-% oder weniger Phosphor, 0,0005 bis 0,0040 Massen-% Schwefel, 0,005 Massen-% oder weniger Aluminium, 0,003 bis 0,03 Massen-% Niob, 0,005 bis 0,02 Massen-% Titan, 0,0050 bis 0,0080 Massen-% Stickstoff und 0,0003 bis 0,0025 Massen-% Bor, 0,0010 bis 0,0040 Massen-% Sauerstoff, gegebenenfalls 0,2 Massen-% oder weniger Vanadium, gegebenenfalls mindestens eines aus 1,0 Massen-% oder weniger Kupfer, 1,0 Massen-% oder weniger Nickel, 0,4 Massen-% oder weniger Chrom und 0,4 Massen-% oder weniger Molybdän, und gegebenenfalls mindestens eines aus 0,0005 bis 0,0050 Massen-% Calcium, 0,0005 bis 0,0050 Massen-% Magnesium, 0,001 bis 0,02 Massen-% Zirkonium und 0,001 bis 0,02 Massen-% Seltenerdmetall, und das ein Ceq (IIW) von 0,33 bis 0,45 aufweist, wobei der Rest Eisen und zufällige Verunreinigungen sind, wobei das Baustahlblech nach Schweißen mit hohem Wärmeeintrag mit einem Schweißwärmeeintrag von mehr als 300 kJ/cm in einer Mikrostruktur der Wärmeeinflusszone, die an eine Schmelzlinie angrenzt, einen Korndurchmesser von ursprünglichem Austenit von 200 µm oder weniger und einen Flächenanteil an Martensit-Austenit-Bestandteil von 1,0 % oder weniger aufweist,
worin Ceq (IIW) = C + Mn/6 + (Cr + Mo + V)/5 + (Cu + Ni)/15, wobei die einzelnen Elementsymbole die Gehalte (Massen-%) der jeweiligen Elemente angeben.

2. Baustahlblech zum Schweißen mit hohem Wärmeeintrag gemäß Anspruch 1, worin die chemische Zusammensetzung 0,03 Massen-% oder mehr und 0,2 Massen-% oder weniger Vanadium enthält.

3. Baustahlblech zum Schweißen mit hohem Wärmeeintrag gemäß Anspruch 1 oder 2, worin die chemische Zusammensetzung mindestens eines aus 0,2 Massen-% oder mehr und 1,0 Massen-% oder weniger Kupfer, 0,2 Massen-% oder mehr und 1,0 Massen-% oder weniger Nickel, 0,1 Massen-% oder mehr und 0,4 Massen-% oder weniger Chrom und 0,1 Massen-% oder mehr und 0,4 Massen-% oder weniger Molybdän enthält.

4. Baustahlblech zum Schweißen mit hohem Wärmeeintrag gemäß einem der Ansprüche 1 bis 3, worin die chemische Zusammensetzung mindestens eines aus 0,0005 bis 0,0050 Massen-% Calcium, 0,0005 bis 0,0050 Massen-% Magnesium, 0,001 bis 0,02 Massen-% Zirkonium und 0,001 bis 0,02 Massen-% Seltenerdmetall enthält.

## Revendications

1. Plaque structurelle d'acier pour soudage à apport de chaleur élevé, présentant une composition chimique consistant en 0,03 % à 0,08 % en masse de carbone, 0,01 % à 0,15 % en masse de silicium, 1,8 % à 2,6 % en masse de manganèse, 0,008 % ou moins en masse de phosphore, 0,0005 % à 0,0040 % en masse de soufre, 0,005 % ou moins en masse d'aluminium, 0,003 % à 0,03 % en masse de niobium, 0,005 % à 0,02 % en masse de titane, 0,0050 % à 0,0080 % en masse d'azote, 0,0003 % à 0,0025 % en masse de bore, 0,0010 % à 0,0040 % en masse d'oxygène, facultativement 0,2 % ou moins en masse de vanadium, facultativement au moins l'un parmi 1,0 % ou moins en masse de cuivre, 1,0 % ou moins en masse de nickel, 0,4 % ou moins en masse de chrome et 0,4 % ou moins en masse de molybdène, et facultativement au moins l'un parmi 0,0005 % à 0,0050 % en masse de calcium, 0,0005 % à 0,0050 % en masse de magnésium, 0,001 % à 0,02 % en masse de zirconium, et 0,001 % à 0,02 % en masse de métal de terre rare, et présentant un Ceq (IIW) de 0,33 à 0,45, le solde étant du fer et des impuretés incidentes, la plaque structurelle d'acier présentant un diamètre de grain avant austénite de 200 µm ou moins et une fraction de zone de constituant martensitique-austénitique de 1,0 % ou moins dans une microstructure de zone affectée par la chaleur adjacente à une ligne de fusion après un soudage à apport de chaleur élevé avec un apport de chaleur de soudage de plus de 300 kJ/cm,
dans laquelle Ceq (IIW) = C + Mn/6 + (Cr + Mo + V)/5 + (Cu + Ni)/15, où les symboles d'éléments individuels indiquent la teneur (% en masse) des éléments respectifs.

2. Plaque structurelle d'acier pour soudage à apport de chaleur élevé selon la revendication 1, dans laquelle la composition chimique contient 0,03 % ou plus en masse et 0,2 % ou moins en masse de vanadium.

3. Plaque structurelle d'acier pour soudage à apport de chaleur élevé selon la revendication 1 ou 2, dans laquelle la composition chimique contient au moins l'un parmi 0,2 % ou plus en masse et 1,0 % ou moins en masse de cuivre, 0,2 % ou plus en masse et 1,0 % ou moins en masse de nickel, 0,1 % ou plus en masse et 0,4 % ou moins en masse de chrome, et 0,1 % ou plus en masse et 0,4 % ou moins en masse de molybdène.

4. Plaque structurelle d'acier pour soudage à apport de chaleur élevé selon l'une quelconque des revendications 1 à 3, dans laquelle la composition chimique contient au moins l'un parmi 0,0005% à 0,0050% en masse de calcium, 0,0005% à 0,0050% en masse de magnésium, 0,001 % à 0,02 % en masse de zirconium, et 0,001 % à 0,02 % en masse de métal de terre rare.
